# EUROPÄISCHE PATENTANMELDUNG

(11) **EP 1 826 387 A2**
(43) Veröffentlichungstag der Anmeldung: **29.08.2007**
(21) Anmeldenummer: 06125603.8
(22) Anmeldetag: 07.12.2006
(51) Int. Cl.: F02F 7/00

(54) **Kreuzkopf-Grossdieselmotor**

(30) Priorität: 24.02.2006 EP 06405081
(71) Anmelder: Wärtsilä Schweiz AG, 8401 Winterthur (CH)
(72) Erfinder: Kiser, Silvan, 8400, Winterthur (CH); Sönnichsen, Samuel, 8405, Winterthur (CH)
(74) Vertreter: Sulzer Management AG

(57) **Zusammenfassung**

Die Erfindung betrifft einen Kreuzkopf-Grossdieselmotor (1) mit einer Grundplatte (2) zur Aufnahme einer Kurbelwelle (3), einem zwei Aussenwände (4) umfassenden Ständer (5), welcher auf der Grundplatte (2) angeordnet ist und mindestens einen Stützkörper (6) umfasst, der durch transversale Stützwände (7) doppelwandig ausgestaltet ist. Der Ständer (5) umfasst Gleitflächen (8) für zwei benachbarte Kreuzköpfe (9), sowie eine auf dem Ständer (5) angeordnete Zylindersektion (10) zur Aufnahme von Zylindern, wobei die Grundplatte (2), der Ständer (5) und die Zylindersektion (10) durch mindestens einen Zuganker (11) miteinander verbunden sind, der sich im Bereich des Ständers (5) innerhalb des doppelwandigen Stützkörpers (6) erstreckt. Dabei ist in der Grundplatte (2) ein transversales Stützelement (12) vorgesehen ist, das einwandig ausgestaltet ist und die Grundplatte (2) umfasst mindestens einen Lagersattel (13) zur Lagerung der Kurbelwelle (3). Erfindungsgemäss ist dabei der Zuganker (11) im Lagersattel (13) in einem Bereich zwischen einer Längsachse (K) der Kurbelwelle (3) und dem Ständer (5) in einer Aussparung (14) mittels eines aus der Aussparung (14) entfernbaren Halteelements (15) fixiert.

## Beschreibung

Die Erfindung betrifft einen Kreuzkopf-Grossdieselmotor gemäss dem Oberbegriff des unabhängigen Anspruchs 1.

Ein Grossdieselmotor der Kreuzkopfbauart, wie er bevorzugt im Schiffsbau oder in stationären Anlagen, beispielsweise zur Erzeugung elektrischer Energie zum Einsatz kommt, umfasst drei grosse Gehäusesegmente, die den Rahmen des Motors bilden. Auf einer Grundplatte, die neben einem Lagersattel mit Kurbelwellenhauptlager zur Aufnahme der Kurbelwelle transversale Stützelemente aufweist, ist, getrennt durch eine Bodenplatte, ein sogenannter Ständer angeordnet. Der Ständer umfassst entsprechend der Anzahl der Zylinder des Grossdieselmotors mehrere gegenüber angeordnete Stützkörper, die jeweils eine senkrecht verlaufende Gleitfläche zur Führung zweier benachbarter Kreuzköpfe, die über Schubstangen mit der Kurbelwelle verbunden sind, aufweisen. Dabei werden jeweils zwei gegenüberliegende senkrecht verlaufende Gleitflächen durch eine Mittelwand zusätzlich abgestützt. Die einzelnen Stützkörper sind in der Regel durch ein gemeinsames Deckblech miteinander verbunden. Oberhalb des Ständers ist dann am Deckblech eine Zylindersektion, häufig auch Zylindermantel genannt, angeordnet die zur Aufnahme mehrerer Zylinderliner geeignet ist. Die Grundplatte, der Ständer und die Zylindersektion werden dabei durch Zuganker, die sich im Bereich des Ständers in aller Regel innerhalb der Stützkörper erstrecken, miteinander verbunden, indem die Zuganker in oder an der Grundplatte unter erheblicher Vorspannung verschraubt werden.

Aus der DE 3 512 347 C1 ist ein Ständer mit einer Abstützung für Kreuzkopfgleitbahnen von Kolbenmaschinen bekannt, bei dem die Abstützung doppelwandig ausgestaltet ist. Der Ständer, auf welchem ein Zylindermantel zur Aufnahme von Zylinderlinern plaziert ist, ist auf Bodenblechen auf einer Grundplatte angeordnet, wobei die Bodenbleche zusammen mit schräg verlaufenden Aussenwänden und senkrechten Gleitflächen zwei im Querschnitt trapezförmige Rahmen bilden, die durch ein gemeinsames Deckblech miteinander verbunden sind. Zwischen den Aussenwänden und den Gleitflächen sind die trapezförmigen Rahmen durch transversale Stützwände ausgefüllt, so dass sich als Abstützung ein doppelwandig ausgestalteter Stützkörper ergibt. Die Grundplatte umfasst einen Lagersattel mit einer unteren und einer oberen Lagerschale mit Lagerdeckel, in welcher Lagerschale die Kurbelwelle im Lagersattel der Grundplatte gelagert ist. Zylindermantel, Ständer und Grundplatte des Motors werden von Zugankern zusammengehalten, die unter Vorspannung unterhalb der Kurbelwelle am oder im Lagersattel fixiert sind.

Bei solchen bekannten Kreuzkopf-Grossdieselmotoren sind die doppelwandig ausgestalteten Stützkörper des Ständers auf ebenfalls doppelwandig ausgestalteten Stützelementen in der Grundplatte abgestützt. Das heisst, sowohl der Ständer als auch die Grundplatte sind durch transversale Stützwände doppelwandig ausgestaltet.

Dieser aus diesem Stand der Technik bekannte Aufbau eines Kreuzkopf-Grossdieselmotors hat dabei einige gravierende Nachteile. Die Stützelemente werden in der Grundplatte durch Schweissnähte fixiert. Wenn die Stützelemente durch zwei gegenüber angeordnete Wände zweiwandig ausgestaltet sind, können die Schweissnähte zwischen zwei Wänden, die in der Grundplatte ein doppelwandiges Stützelement bilden, nicht gegengeschweisst werden, so dass sich entsprechende Probleme mit der Festigkeit bzw. der Stabilität der Grundplatte ergeben. Die Ausrichtung der Grundplatte in Bezug auf den Ständer ist schwierig, weil die Wände des Stützelementes der Grundplatte fluchtend in Bezug auf die Stützwände des Stützkörpers im Ständer angeordnet werden müssen. Darüber hinaus sind die Zuganker am unteren Ende des Sattels, also unterhalb der Kurbelwelle fixiert, so dass die Zuganker durch Bohrungen im Lagersattel, durch sogenannte Zugankerpfeifen, bis in einen unteren Bereich des Lagersattel geführt werden müssen. Da die Zuganker unter erheblicher Vorspannung unterhalb des Lagersattels fixiert werden müssen, führt das zu erhebliche Verspannungen im Lagersattel und zu Deformationen der Lagerschale. Damit ist die bekannte Grundplatte relativ steif und rein konstruktiv relativ aufwendig.

Diese Probleme werden mit einer Anordnung, wie in der EP 1 382 829 beschrieben, im wesentlichen gelöst. Der in der EP 1 382 829 offenbarte Kreuzkopf-Grossdieselmotor ist mit einer Grundplatte ausgestattet, die ein transversales Stützelement umfasst, das einwandig ausgestaltet ist. D.h. auf einer einwandig ausgestalteten Grundplatte wurde erstmals ein doppelwandiger Ständer angeordnet. Grundplatte, der Ständer und die Zylindersektion dieses Kreuzkopf-Grossdieselmotors sind durch Zuganker miteinander verbunden, wobei sich der Zuganker im Bereich des Ständers innerhalb des doppelwandigen Stützkörpers erstreckt und in einem Lagersattel der Grundplatte mit einwandigem Stützelement fixiert ist.

Dabei wurde bis zu der Erfindung gemäss EP 1 382 829 aus Stabilitätsgründen eine doppelwandige Ausführung der Grundplatte als zwingend notwendig erachtet, wenn der Ständer aus doppelwandig ausgestalteten Stützkörper aufgebaut ist. Da die Zuganker unter erheblicher Vorspannung in der Grundplatte verankert werden müssen, wurde bei einer Kombination von doppelwandigem Stützkörper im Ständer mit einwandigem Stützelement in der Grundplatte, sowohl im unteren Bereich des Ständers und in den Bodenblechen, als auch im Bereich des Lagersattels aufgrund von Biegebelastungen mit nicht vertretbaren mechanischen Spannungen im Material gerechnet. Darüber hinaus war das Problem des sogenannten "fretting", das bei einer Kombination von einwandiger Grundplatte mit doppelwandigem Ständer zu erwarten ist, bisher ungelöst. Unter "fretting" versteht man eine bestimmte Art von Reibkorrosion, die an den Kontaktflächen zwischen Ständer und Grundplatte auftreten kann. Aus den zuvor genannten Gründen galt daher in der Vergangenheit eine Kombination von doppelwandig ausgestaltetem Ständer mit einer einwandig ausgestalteten Grundplatte als nicht praktikabel. Es konnte jedoch gezeigt werden, dass diese Probleme durch einen definierten Kraftfluss vermieden werden können, wenn der Ständer und die Grundplatte im Bereich des Zugankers entsprechend ausgestaltet werden.

Für die Praxis von besonderer Bedeutung ist dabei, dass der Zuganker gemäss EP 1 382 829 nicht durch den gesamten Lagersattel durch eine Bohrung hindurchgeführt wird und dann unterhalb des Lagersattels, z.B. mittels einer Zugankermutter verschraubt wird, sondern der Zuganker im Lagersattel in einer Gewindebohrung fixiert wird, die oberhalb der Achse der Kurbelwelle, also zwischen der Mittelachs der Kurbelwelle und dem Ständer vorgesehen ist. Dadurch konnten erstmals wirksam die gefürchteten erheblichen Verspannungen im Lagersattel verhindert werden, die zu den bis dahin unvermeidlichen Deformationen der Lagerschale führen. Wenn die Zuganker nämlich oberhalb der Achse der Kurbelwelle in der Grundplatte fixiert werden, werden die erheblichen Zugspannungen, unter denen die Zuganker stehen, nicht mehr in Form einer Deformation auf das Kurbelwellenlager übertragen.

Ein weiterer Vorteil der einwandig ausgeführten Grundplatte besteht darin, dass die Grundplatte viel flexibler, also viel weniger starr auf Bewegungen der Kurbelwelle reagiert. Dadurch werden die Belastungen auf die Lagerung der Kurbelwelle und die Kurbelwelle selbst deutlich reduziert und die Laufeigenschaften der Maschine insgesamt deutlich verbessert.

Trotz all dieser Fortschritte hat die Art und Weise der Fixierung der Zuganker in der Grundplatte einige Nachteile. Durch das Einschrauben der Zuganker in die Gewindebohrung in der Grundplatte ist der Zuganker relativ starr mit der Grundplatte verbunden. Aufgrund verschiedenster Belastungen im Betriebszustand des Grossdieselmotors, insbesondere durch Biegebelastungen, Vibrationen und andere durch mechanische Kräfte hervorgerufene Spannungen im Zuganker, kann es zu Beschädigungen des Zugankers, insbesondere in der Umgebung der Gewindebohrungen kommen, so dass im Zuganker z.B. gefährliche Risse entstehen können, die im schlimmsten Fall dazu führen, dass der unter erheblicher Vorspannung stehende Zuganker abreisst. Diese Gefahr ist insbesondere dann gross, wenn z.B. die Zuganker etwas ungleichmässig vorgespannt sind, so dass z.B. zwei benachbarte Zuganker unter unterschiedlicher Vorspannung stehen.

Ausserdem kann es z.B. beim Ein- oder Ausschrauben oder auch aufgrund mechanischer Belastungen im Betriebszustand zu Schäden am Gewinde der Gewindebohrung kommen, die nur unter erheblichem Aufwand, im schlimmsten Fall überhaupt nicht mehr behebbar sind, so dass die entsprechenden Teile der Grundplatte ausgetauscht werden müssen, was entsprechend aufwändig, zeitraubend und teuer ist.

Im übrigen hat sich gezeigt, dass das Einbringen der Gewindebohrungen an sich ein sehr aufwändiger und teuerer Prozess ist, insbesondere, da die Gewindebohrungen mit äusserster Präzision und Sorgfalt in die Bodenplatte eingebracht werden müssen.

Es ist daher eine Aufgabe der Erfindung, einen Kreuzkopf-Grossdieselmotor mit einer verbesserten Verankerung der Zuganker in der Grundplatte vorzuschlagen, so dass die zuvor geschilderten Nachteile des Standes der Technik vermieden werden.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit einen Kreuzkopf-Grossdieselmotor mit einer Grundplatte zur Aufnahme einer Kurbelwelle, einem zwei Aussenwände umfassenden Ständer, welcher auf der Grundplatte angeordnet ist und mindestens einen Stützkörper umfasst, der durch transversale Stützwände doppelwandig ausgestaltet ist. Der Ständer umfasst Gleitflächen für zwei benachbarte Kreuzköpfe, sowie eine auf dem Ständer angeordnete Zylindersektion zur Aufnahme von Zylindern, wobei die Grundplatte, der Ständer und die Zylindersektion durch mindestens einen Zuganker miteinander verbunden sind, der sich im Bereich des Ständers innerhalb des doppelwandigen Stützkörpers erstreckt. Dabei ist in der Grundplatte ein transversales Stützelement vorgesehen, das einwandig ausgestaltet ist, und die Grundplatte umfasst mindestens einen Lagersattel zur Lagerung der Kurbelwelle. Erfindungsgemäss ist dabei der Zuganker im Lagersattel in einem Bereich zwischen einer Längsachse der Kurbelwelle und dem Ständer in einer Aussparung mittels eines aus der Aussparung entfernbaren Halteelements fixiert.

Der Ständer kann dabei ein Bodenblech, ein Deckblech und eine zwischen zwei gegenüberliegenden Gleitflächen angeordnete Mittelwand umfassen.

Dadurch, dass der Zuganker im Lagersattel in einem Bereich zwischen der Längsachse der Kurbelwelle und dem Ständer in einer Aussparung mittels eines aus der Aussparung entfernbaren Halteelementes fixiert ist, ist der Zuganker nicht mehr starr in einer Gewindebohrung mit dem Lagersattel verbunden. Der Zuganker, der an seinem lagerseitigen Ende eine Verschraubung aufweist, ist nämlich durch eine Bohrung im Lagersattel verschraubungsfrei geführt und wir dann z.B. mittels einer Zugankermutter, die lösbar in der Aussparung vorgesehen ist, in der Aussparung fixiert. Diese Art der Befestigung des Zugankers gewährleistet auch unter den enormen Zugspannungen, unter denen der Zuganker im Einbauzustand steht, eine hohe Flexibilität zwischen Zuganker und Lagersattel, so dass mechanische Belastungen des Zugankers, wie Vibrationen, Biegebelastungen und dergleichen, wie sie unvermeidlich im Betriebszustand auftreten, flexibel abgeleitet werden können und somit nicht mehr vom Zuganker bzw. der Verschraubung und / oder dem System Zuganker-Gewindebohrung allein absorbiert werden müssen.

Selbst wenn es zum Beispiel zum Bruch oder Riss eines Zugankers kommen sollte, z.B. weil der Zuganker Herstellungsmängel aufweist oder die Installation der Zuganker nicht mit der notwendigen Sorgfalt durchgeführt wurde, z.B. wenn zwei Zuganker mit unterschiedlichen Vorspannungen installiert wurden, kann ein defekter oder zerstörter Zuganker auf besonders einfache Art und Weise ersetzt werden, ohne dass zum Beispiel eine Gewindebohrung für den Zuganker von abgebrochenen Teilen des Zugankers aufwendig befreit werden muss, oder gar die Bohrung als solches wieder in Stand gesetzt werden muss.

Die Installation bzw. Deinstallation der Zuganker gemäss der vorliegenden Erfindung ist somit sehr einfach und damit kostensparend und erhöht insbesondere die Betriebssicherheit des gesamten Schiffes im Falle eines defekten Zugankers.

In einer bevorzugten Ausführungsform des erfindungsgemässen Kreuzkopf-Grossdieselmotors erstrecken sich die transversalen Stützwände des Stützkörpers, an welchen Stützwänden die Gleitflächen für je zwei benachbarte Kreuzköpfe angeordnet sind, im Ständer V-förmig in Richtung zur Zylindersektion, d.h. die transversalen Stützwände erstrecken sich mit sich vergrösserndem Abstand nach oben in Richtung zur Zylindersektion. Dabei kann zur Abstützung zwischen zwei gegenüberliegenden Gleitflächen zusätzlich eine Mittelwand angeordnet sein.

Dabei ist im Rahmen dieser Anmeldung unter einer "transversalen" Orientierung, wie üblich eine Orientierung zu verstehen, die im wesentlichen senkrecht zu der Richtung liegt, in welche sich die Achse der Kurbelwelle des Grossdieselmotors erstreckt.

Da bekanntlich die Normalkräfte, die der Kreuzkopf auf die Gleitbahnen, die von den Stützwänden des Stützkörpers getragen werden, nahe dem oberen Totpunkt der Bewegung eines mit dem Kreuzkopf verbundenen Kolbens, welcher Kolben in einem Zylinder des Kreuzkopf-Grossdieselmotors in bekannter Weise hin- und herbewegbar angeordnet ist, am grössten sind, können diese durch die V-förmige Ausgestaltung des Stützkörpers, insbesondere im oberen Bereich des Ständers, besonders gut aufgenommen und abgeleitet werden. Selbstverständlich können, insbesondere aufgrund konstruktiver Vorgaben, die transversalen Stützwände des Stützkörpers auch parallel zueinander angeordnet sein.

Bevorzugt, jedoch nicht notwendigerweise, erstreckt sich der Zuganker im Bereich des Ständers mittig zwischen den transversalen Stützwänden des Stützkörpers, wobei das einwandig ausgestaltete Stützelement in der Grundplatte bevorzugt fluchtend zur Längsachse des Zugankers angeordnet ist.

Die Grundplatte weist dabei mindestens einen Lagersattel zur Lagerung der Kurbelwelle auf, wobei der Zuganker im oder am Lagersattel bevorzugt an einer Zugankermutter in der Aussparung fixiert ist. Da der Zuganker, wie bereits erwähnt, unter erheblicher Vorspannung in oder an der Grundplatte verankert werden muss, werden durch die Fixierung des Zugankers in einem Bereich zwischen der Achse der Kurbelwelle und dem Ständer insbesondere bei den Lagerschalen, in denen die Kurbelwelle in bekannter Weise im Lagersattel gelagert ist, Deformationen aufgrund von Zugbelastungen durch den Zuganker weitgehend vermieden.

Als besonders vorteilhaft erweist es sich, wenn sich der Zuganker im Bereich des Ständers mittig zwischen den transversalen Stützwänden des Stützkörpers erstreckt und das einwandig ausgestaltete Stützelement in der Grundplatte fluchtend zur Längsachse des Zugankers angeordnet und der Zuganker in einem Bereich zwischen der Achse der Kurbelwelle und dem Ständer fixiert ist. Selbstverständlich muss sich der Zuganker nicht notwendigerweise mittig zwischen den transversalen Stützwänden erstrecken und das einwandige Stützelement muss auch nicht in jedem Fall fluchtend zur Längsachse des Zugankers angeordnet sein.

Vielmehr kann sich der Zuganker in einem anderen Ausführungsbeispiel auch asymmetrisch zwischen den transversalen Stützwänden des Stützkörpers erstrecken wobei sich der Zuganker bevorzugt unter einem vorgebbaren Winkel zu einer Zylinderachse und senkrecht zur Längsachse der Kurbelwelle, bevorzugt unter einem Winkel von 0° bis 5°, im speziellen von 1° bis 3° zwischen den transversalen Stützwänden des Stützkörpers erstreckt. Durch eine geeignete Wahl der Neigung des Zugankers kann dabei im Bereich der Grundplatte bzw. des transversalen Stützelements zwischen der Aussparung, in der der Zuganker fixiert ist und der Kurbelwelle eine Vergrösserung des Abstands erreicht werden, so dass ein Materialgewinn in Richtung zur Kurbelwelle erzielt wird, so dass eine höhere Festigkeit der Grundplatte bzw. der Befestigung des Zugankers im transversalen Stützelement erreichbar ist.

Bevorzugt wird der Zuganker bei der Montage unter der gewünschten Neigung mittels einer an sich bekannten Aushängeöse zwischen die transversalen Stützwände eingeführt, wodurch eine problemlose Montage des Stützankers ermöglicht wird.

In einer bevorzugten Ausführungsform erstrecken sich zwischen zwei benachbarten Kreuzköpfen bevorzugt genau zwei Zuganker, wobei es auch möglich ist, dass sich zwischen zwei benachbarten Kreuzköpfen, insbesondere aus Stabilitätsgründen, mehr als ein Zuganker erstreckt.

In einem weiteren Ausführungsbeispiel kann zur Erhöhung der Flexibilität der Lagerung der Kurbelwelle ein an der Grundplatte vorgesehenes Seitenblech als erweitertes Seitenblech ausgebildet sein, so dass das Seitenblech unterhalb der Kurbelwelle einen Teil der Grundplatte bildet.

Die Erfindung wird im Folgenden an Hand der Zeichnung näher erläutert. Es zeigen in schematischer Darstellung:
- Fig. 1: Schnitt durch einen Kreuzkopf-Grossdieselmotor mit Grundplatte, Ständer und Zylindersektion;
- Fig. 2: einen Schnitt I - I gemäss Fig. 1 durch einen bekannten Kreuzkopf-Grossdieselmotor mit doppelwandigem Stützkörper und einwandig ausgestaltetem Stützelement;
- Fig. 3: einen Schnitt II - II gemäss Fig. 1 durch einen erfindungsgemässen Kreuzkopf-Grossdieselmotor mit je zwei doppelwandigen Stützkörpern zwischen zwei benachbarten Kreuzköpfen;
- Fig. 4: eine erfindungsgemässe Zuganker Befestigung;
- Fig. 4a: einen asymmetrisch angeordneten Zuganker;
- Fig. 5: eine Grundplatte mit erweitertem Seitenblech.

Der erfindungsgemässe Kreuzkopf-Grossdieselmotor, der im folgenden gesamthaft mit dem Bezugszeichen 1 bezeichnet wird, ist insbesondere als Zweitakt-Grossdieselmotor 1 mit Längsspülung ausgelegt, wie er beispielsweise im Schiffsbau verbreitet Verwendung findet.

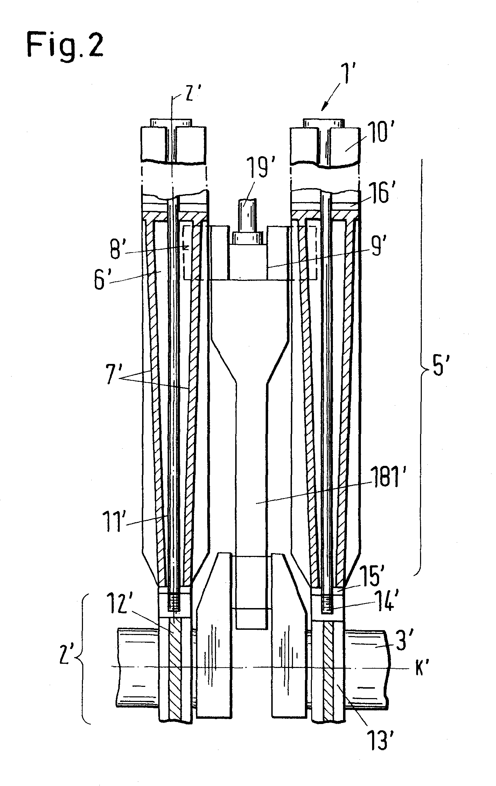

In der weiteren Beschreibung wird zur Verdeutlichung und Abgrenzung der vorliegenden Erfindung anhand der Fig. 2 kurz ein aus dem Stand der Technik bekannter Aufbau eines Kreuzkopf-Grossdieselmotors diskutiert. Zur Abgrenzung des Stands der Technik von der vorliegenden Erfindung, sind diejenigen Merkmale, die sich auf einen aus dem Stand der Technik bekannten Motor beziehen, mit einem Hochkomma versehen, während die erfindungsgemässen Merkmale mit Bezugszeichen ohne Hochkomma bezeichnet sind.

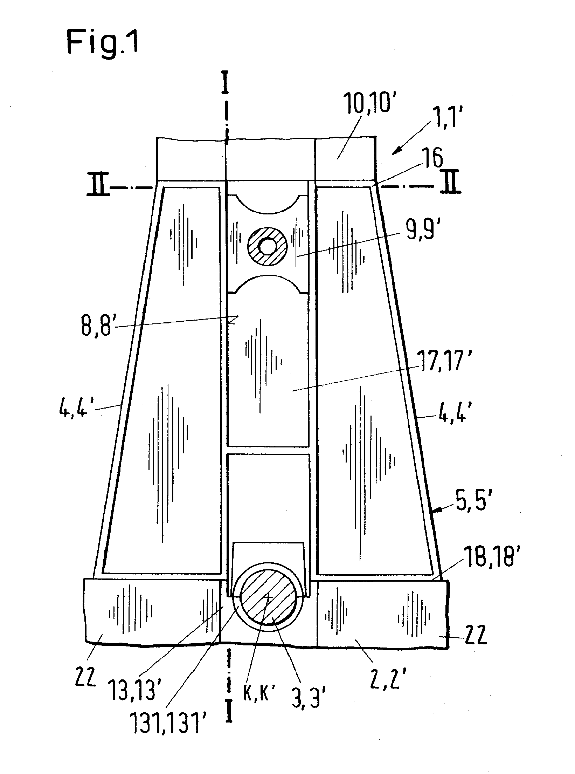

Fig. 1 zeigt schematisch im Schnitt den allgemeinen Aufbau eines Kreuzkopf-Grossdieselmotors 1,1', wie er aus dem Stand der Technik bereits bekannt ist, aber im Prinzip auch bei einem erfindungsgemässen Motor 1 realisiert ist. Der erfindungsgemässe Motor 1 unterscheidet sich dabei von einem aus dem Stand der Technik bekannten Motor 1'insbesondere durch die unterschiedliche Fixierung der Zuganker im Lagersattel 13, 13'.

Der Kreuzkopf-Grossdieselmotor 1, 1' umfasst in an sich bekannter Weise eine Grundplatte 2, 2', einen Ständer 5, 5' und eine Zylindersektion 10, 10'. Die Zylindersektion 10, 10' dient in an sich bekannter Weise zur Aufnahme von nicht dargestellten Zylindern. Der Ständer 5, 5', der beispielsweise durch Zusammenschweissen von Stahlblechen entstanden ist, weist ein Bodenblech 18, 18' sowie zwei Aussenwände 4, 4' auf und bildet gemeinsam mit den darstellungsgemäss senkrecht verlaufenden Gleitflächen 8, 8' zwei im Querschnitt trapezförmige Rahmen, die durch ein gemeinsames Deckblech 16, 16' miteinander verbunden sind. Die zwei gegenüberliegenden senkrecht verlaufenden Gleitflächen 8, 8' werden durch eine Mittelwand 17, 17', die zwischen den beiden trapezförmigen Rahmen angeordnet ist, abgestützt. Der Ständer 5, 5' ist mit dem Bodenblech 18, 18' auf der Grundplatte 2, 2' angeordnet, die einen Lagersattel 13, 13' mit Lagerschale 131, 131' zur Lagerung einer Kurbelwelle 3, 3' umfasst. Die Kurbelwelle 3, 3' mit Achse K, K' ist in an sich bekannter Weise mit einem Kreuzkopf 9, 9' über eine in Fig. 1 nicht gezeigte Schubstange verbunden.

Fig. 2 zeigt einen Schnitt gemäss Fig. 1 entlang der Schnittlinie I - I durch ein aus dem Stand der Technik bekanntes Ausführungsbeispiel eines Kreuzkopf-Grossdieselmotors 1', bei welchem der Zuganker 11' in einem Bereich zwischen der Kurbelwelle 3' und dem Ständer 5' in einer Gewindebohrung fixiert ist. Das Beispiel der Fig. 2 umfasst den Ständer 5', der auf der Grundplatte 2' angeordnet ist, sowie die Zylindersektion 10', die auf dem Ständer 5' platziert ist. Zwischen dem Ständer 5' und der Zylindersektion 10' ist ein Deckblech 16' und zwischen dem Ständer 10' und der Grundplatte 2' ein Bodenblech 18' angeordnet. Die Zylindersektion 10' ist in bekannter Weise zur Aufnahme eines oder mehrerer nicht gezeigter Zylinder geeignet. Der Innenraum des Zylinders bildet in bekannter Weise zusammen mit einem nicht gezeigten Zylinderdeckel und einem ebenfalls nicht gezeigten Kolben, der mittels einer Kolbenstange 19' mit dem Kreuzkopf 9' verbunden und im Zylinder hin- und herbewegbar angeordnet ist, einen Brennraum des Kreuzkopf-Grossdieselmotors 1'. Der Ständer 5' umfasst einen Stützkörper 6', der durch transversale Stützwände 7' doppelwandig ausgestaltet ist. Die Stützwände 7' tragen eine Gleitfäche 8' zur Führung des Kreuzkopfes 9', der mittels einer Schubstange 181' mit der Kurbelwelle 3' und mit der Kolbenstange 19' mit einem nicht dargestellten Kolben des Kreuzkopf-Grossdieselmotors 1' verbunden ist.

Die Grundplatte 2' umfasst zur Aufnahme und Lagerung der Kurbelwelle 3' einen Lagersattel 13' sowie ein transversales Stützelement 12', das einwandig ausgestaltet ist. Zylindersektion 10', Ständer 5' und Grundplatte 2' sind durch einen Zuganker 11' unter Vorspannung miteinander verbunden. Dabei erstreckt sich der Zuganker 11' im Bereich des Ständers 5' zwischen den transversalen Stützwänden 7' innerhalb des doppelwandigen Stützkörpers 6' und ist im Lagersattel 13' der Grundplatte 2' in einem Bereich zwischen der Achse K' der Kurbelwelle 3' und dem Ständer 5', also darstellungsgemäss oberhalb der Achse K' der Kurbelwelle 3' in einer Gewindebohrung 14' fixiert.

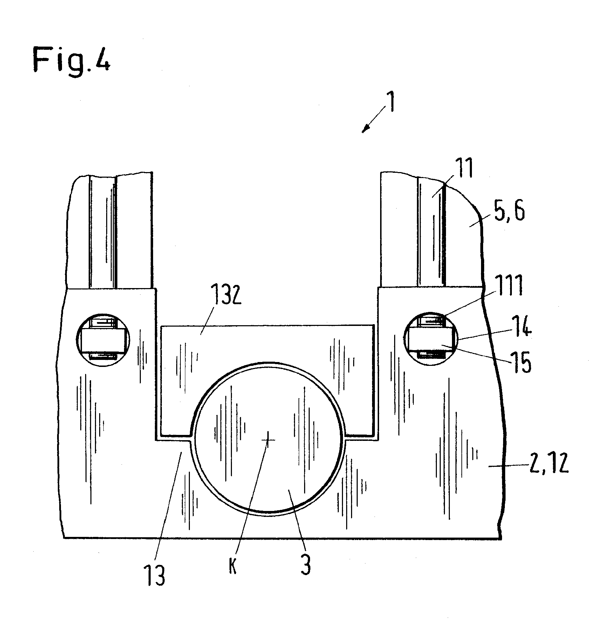

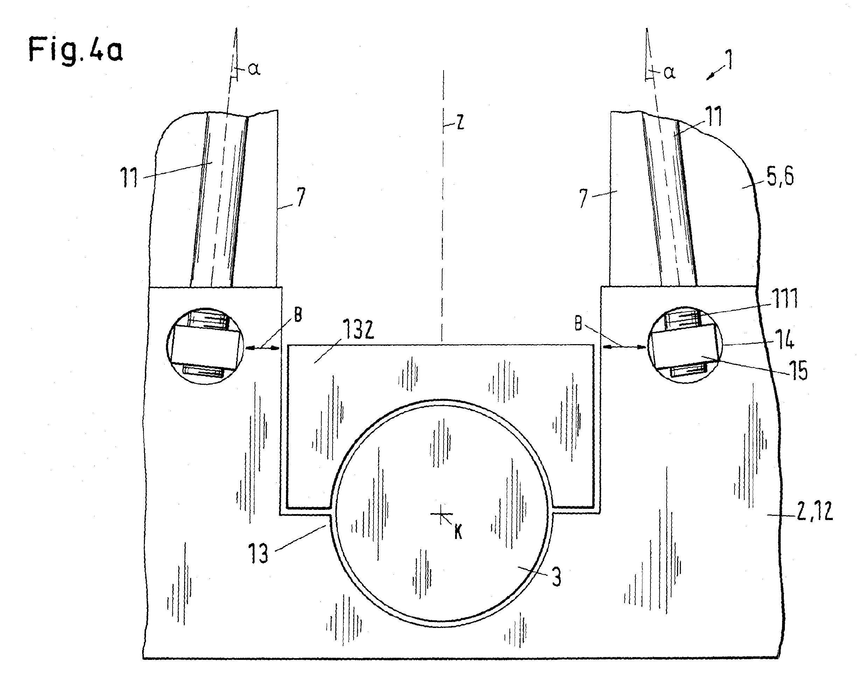

Der wesentliche Unterschied des erfindungegmässe Kreuzkopf-Grossdieselmotor 1 zu dem in Fig. 2 dargestellten bekannten Kreuzkopf-Grossdieselmotor 1' besteht somit darin, dass bei einem erfindungsgemässen Motor 1 der Zuganker 11 nicht in einer Gewindebohrung im Lagersattel 13 fixiert ist, sondern wie anhand der Fig. 4 weiter unten noch genauer erläutert wird, der Zuganker 11 im Lagersattel 13 in einem Bereich zwischen der Achse K der Kurbelwelle 3 und dem Ständer 5 in einer Aussparung 14 mittels eines aus der Aussparung 14 entfernbaren Halteelements 15, bevorzugt mittels einer Zugankermutter 15 fixiert ist.

Bei dem in Fig.2 dargestellten bekannten Ausführungsbeispiel erstrecken sich die transversalen Stützwände 7' des Stützkörpers 6' V-förmig in Richtung der Zylindersektion 10', das heisst der gegenseitige Abstand der Stützwände 7' eines Stützkörpers 6' vergrössert sich zunehmend in Richtung zur Zylindersektion 10'. Die Normalkräfte, die der Kreuzkopf 9' über die Gleitfächen 8' auf die Stützwände 7' und damit auf den Stützkörper 6' überträgt, sind bekanntlich nahe am oberen Totpunkt der Hin- und Herbewegung des Kolbens am grössten. Durch die V-förmige Gestaltung des Stützkörpers 6' ist dieser im darstellungsmässig oberen Bereich des Ständers 5' relativ breit und kann daher die Normalkräfte des Kreuzkopfes 9' besonders gut aufnehmen bzw. in den Ständer 5' ableiten.

In dem in Fig. 2 dargestellten bekannten Ausführungsbeispiel erstreckt sich der Zuganker 11' mit seiner Längsachse Z' mittig zwischen den transversalen Stützwänden 7' des Stützkörpers 6', wobei das einwandig ausgestaltete Stützelement 12' der Grundplatte 2', auf dem sich der Stützkörper 6' in der Grundplatte 2' abstützt, fluchtend zur Längsachse Z' des Zugankers 11' angeordnet ist. Der Zuganker 11' ist, insbesondere um Deformationen der Lagerschalen 131' zu vermeiden, in einem Bereich zwischen der Achse K' der Kurbelwelle 3' und dem Ständer 5', darstellungsgemäss also oberhalb der Achse K' der Kurbelwelle 3', im Lagersattel 13' in einer Gewindebohrung 14' fixiert. Dadurch, dass das einwandige Stützelement 12' in der Grundplatte 2' fluchtend zur Längsachse Z' des Zugankers 11' und damit symmetrisch in Bezug auf die Stützwände 7' des Stützkörpers 6' angeordnet ist, ergibt sich eine besonders hohe Stabilität, ohne dass die Grundplatte 2' eine zu hohe Steifigkeit aufweist.

Das in den beiden vorangehenden Abschnitten gesagte trifft dabei völlig analog auch auf einen erfindungsgemässen Motor 1 zu, da diese Merkmale die Art und Weise der Fixierung des Zugankers 1, 1' im Lagersattel 13, 13" im Prinzip nicht beeinflussen.

Das heisst, ein bevorzugtes Ausführungsbeispiel eines erfindungsgemässen Motors 1 ist im Prinzip gleich aufgebaut, wie das in Fig. 2 dargestellte Beispiel eines bekannten Motors 1', mit dem entscheidenden Unterschied, dass bei einem erfindungsgemässen Motor 1 der Zuganker 11 nicht in einer Gewindebohrung im Lagersattel 13 fixiert ist, sondern wie anhand der Fig. 4 weiter unten noch genauer erläutert wird, der Zuganker 11 im Lagersattel 13 in einem Bereich zwischen der Achse K der Kurbelwelle 3 und dem Ständer 5 in einer Aussparung 14 mittels eines aus der Aussparung 14 entfernbaren Halteelements 15, bevorzugt mittels einer Zugankermutter 15 fixiert ist.

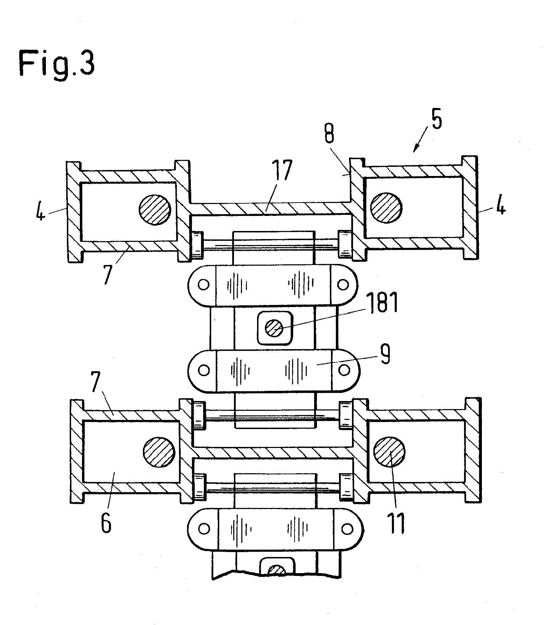

Fig. 3 zeigt schliesslich einen weiteren Schnitt gemäss Fig. 1 entlang der Linie II - II für einen erfindungsgemässen Kreuzkopf-Grossdieselmotor 1 gemäss der vorliegenden Erfindung. Dargestellt sind je zwei im Ständer 5 gegenüber angeordnete Stützkörper 6, die durch die Mittelwand 17 zwischen den Gleitflächen 8 gegeneinander abgestützt sind. Der Kreuzkopf 9 wird zwischen je zwei gegenüberliegenden Gleitflächen 8 von jeweils zwei benachbarten Stützkörpern 6 geführt. In jedem Stützkörper 6 erstreckt sich zwischen den Stützwänden 7 genau ein Zuganker 11.

In Fig. 4 ist schematisch ein Ausschnitt eines erfindungsgemässen Kreuzkopf-Grossdieselmotors 1 im Bereich des Lagersattels 13 dargestellt. Die Kurbelwelle 3 mit Längsachse K ist in an sich bekannter Weise im Lagersattel 13 gelagert und mit einem Lagerdeckel 132 gesichert. Der Zuganker 11 ist erfindungsgemäss im Lagersattel 13 in einem Bereich zwischen der Längsachse K und dem Ständer 5, darstellungsgemäss also oberhalb der Längsachse K, in der Aussparung 14 mittels eines aus der Aussparung 14 entfernbaren Halteelements 15 fixiert. Bei dem in Fig. 4 gezeigten Ausführungsbeispiel weist der Zuganker 11 im Einbauzustand im Bereich der Aussparung 14 ein Gewinde 111 auf, mit welchem der Zuganker 11 im Halteelement 15, das hier eine Zugankermutter 15 ist, sicher verschraubt werden kann. Dabei ist der Zuganker 11 nicht direkt mit dem Lagersattel 13, wie aus dem Stand der Technik bekannt, verschraubt, sondern ist lediglich durch eine in Fig. 4 nicht sichtbare Bohrung durch den Lagersattel bis in die Aussparung 14 frei durchgeführt, wo der Zuganker 11 zur Fixierung mit der Zugankermutter 15 verschraubbar ist.

In Fig. 4a ist ein weiteres Ausführungsbeispiel mit einem asymmetrsich angeordneten Zuganker 11 schematisch dargestellt. Bei diesem Ausführungsbeispiel erstreckt sich der Zuganker 11 asymmetrisch zwischen den transversalen Stützwänden 7 des Stützkörpers 6, und zwar bevorzugt unter einem vorgebbaren Winkel α zu einer Zylinderachse Z und senkrecht zur Längsachse K der Kurbelwelle 3. Der Winkel α liegt dabei vorteilhaft bei einem Wert zwischen 0° bis 5°, im speziellen bei 1° bis 3°. Durch eine solche geeignete Wahl der Neigung des Zugankers 11 kann dabei im Bereich der Grundplatte 2 bzw. des transversalen Stützelements 12 zwischen der Aussparung 14, in der der Zuganker 11 im Lagersattel 13 fixiert ist und der Kurbelwelle 3 eine Vergrösserung des Abstands B erreicht werden, so dass ein Materialgewinn in Richtung zur Kurbelwelle 3 erzielt wird, so dass eine höhere Festigkeit der Grundplatte 2 bzw. der Befestigung des Zugankers 11 im transversalen Stützelement 12 erreicht wird.

Bevorzugt wird dabei, wie bereits erwähnt, der Zuganker 11 bei der Montage unter der gewünschten Neigung α mittels einer an sich bekannten Aushängeöse zwischen die transversalen Stützwände 7 eingeführt, wodurch eine problemlose Montage des Stützankers 11 ermöglicht wird.

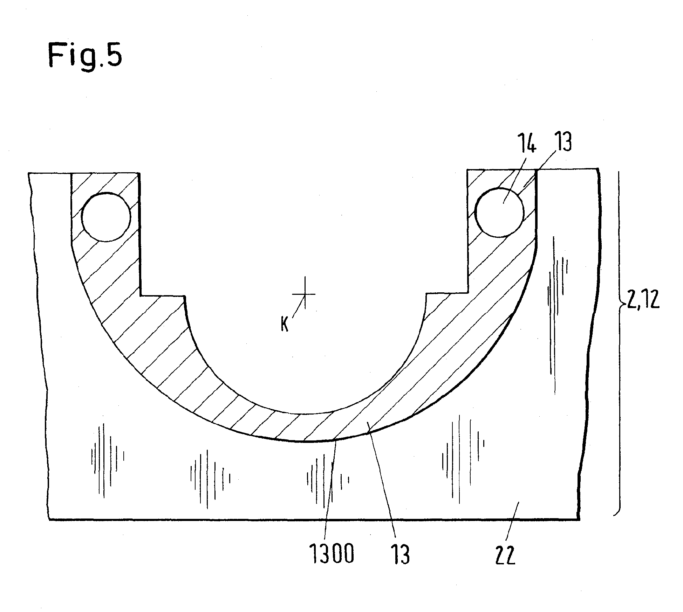

In Fig. 5 ist schliesslich eine spezielle Ausführungsform einer Grundplatte 2 gezeigt, wobei die Grundplatte 2 im Bereich des Stützelements 12 einen Lagersattel 13 mit erweitertem Seitenblech 22 umfasst.

Ein in Fig. 13 nicht dargestellter Zuganker 11 ist, wie in Fig. 4 beschrieben, in der Aussparung 14 mittels einer Zugankermutter 15 am Lagersattel 13 fixierbar. D.h., im Einbauzustand erstreckt sich der Zuganker 11 darstellunggemäss nach oben in den Ständer 5 des Kreuzkopf-Grossdieselmotors 1.

Bei dem in Fig. 5 dargestellten Beispiel ist der Lagersattel 13, in dem die in Fig. 5 nicht dargestellte Kurbelwelle 3 mit Längsachse K gelagert ist, nur in einem eingeschränkten Bereich als Lagersattel 13 in voller Materialstärke ausgebildet. Anders als in Fig. 1, wo die in Bezug auf den Lagersattel 13 dünneren Seitenbleche 22 sich darstellungsgemäss rechts und links an den eigentlichen Lagersattel 13 anschliessen, und die beiden Seitenbleche 22 zwei voneinander getrennte, an den Lagersattel 13 darstellungsgemäss rechts und links angeschweisste Seitenbleche 22 sind, ist bei dem Ausführungsbeispiel der Fig. 5 ein erweitertes Seitenblech 22 vorgesehen, in das der eigentliche Lagersattel 13 eingebettet ist. Das heisst, der Lagersattel 13, der eine deutlich grössere Materialstärke hat als das Seitenblech 22, das heisst. dass der Lagersattel 13 ist in Richtung der Längsachse K der Kurbelwelle3 deutlich dicker ausgeführt, als das Seitenblech 2 in Bezug auf dieselbe Richtung, ist entlang der Linie 1300 mit dem Seitenblech 22 verschweisst.

Durch die Verwendung eines erweiterten Seitenblechs 22 gemäss Fig. 5 wird die ohnehin schon sehr gute Lagerungsdynamik auf Grund des einwandig ausgestalteten transversalen Stützelements 12 weiter verbessert, dass heisst die Lagerung der Kurbelwelle 3 ist in Bezug auf Belastungen im Betriebszustand noch flexibler gelagert, so dass deutlich verbesserte Laufeigenschaften erzielbar sind.

Es versteht sich, dass die oben beschriebenen Ausführungsbeispiele erfindungsgemässer Kreuzkopf-Grossdieselmotoren lediglich exemplarisch zu verstehen sind und die Erfindung insbesondere, aber nicht nur, auch alle geeigneten Kombinationen der beschriebenen Ausführungsbeispiele umfasst.

Zusammenfassend ist nochmals zu betonen, dass, neben der erfindungsgemässen Verankerung des Zugankers im Lagersattel, die Grundplatte des Kreuzkopf-Grossdieselmotors der vorliegenden Erfindung ein einwandig ausgestaltetes transversales Stützelement aufweist, das beim Zusammenbau des Motors problemlos gegengeschweisst werden kann, so dass die Probleme mit der Festigkeit bzw. der Stabilität der Grundplatte, wie sie sich bei der aus dem Stand der Technik bekannten Grundplatte mit doppelwandigen Stützelementen ergeben, vermieden werden. Die Zuganker sind als kurze Zuganker ausgeführt und in einem oberen Bereich des Sattels, das heisst zwischen der Achse der Kurbelwelle und dem Bodenblech des Ständers in einer Aussparung mit einer Zugankermutter fixiert. Dadurch werden Verspannungen im Lagersattel sowie Deformationen der Lagerschale durch den unter erheblicher Vorspannung im Lagersattel fixierten Zuganker weitestgehend vermieden. Die Flexibilität und Dynamik der Lagerung der Kurbelwelle wird insbesondere durch die kurzen Zuganker und die einwandig ausgestalteten Stützelemente, sowie im Speziellen durch den Einsatz eines erweiterten Seitenblechs optimiert. Da die Zuganker unter erheblicher Vorspannung in der Grundplatte verankert werden müssen, wurde bisher eine Kombination von doppelwandigem Stützkörper im Ständer mit einwandigem Stützelement in der Grundplatte im wesentlichen nicht in Betracht gezogen, da sowohl im unteren Bereich des Ständers und in den Bodenblechen, als auch im Bereich des Lagersattels mit nicht zu vermeidenden Biegebelastungen und daraus resultierenden nicht vertretbaren mechanischen Spannungen im Material gerechnet wurde. Durch entsprechende Gestaltung des Ständers und der Grundplatte im Bereich des Zugankers in Kombination mit dessen Befestigung mittels Zugankermutter in der Aussparung des Lagersattels konnten sowohl die bisher befürchteten Probleme durch Biegebelastungen, als auch das bei einer solchen Konstruktion erwartete Fretting vermieden werden. Insbesondere ist die Bodenplatte des erfindungsgemässen Grossdieselmotors konstruktiv deutlich vereinfacht worden.

## Patentansprüche

1. Kreuzkopf-Grossdieselmotor mit einer Grundplatte (2) zur Aufnahme einer Kurbelwelle (3), einem zwei Aussenwände (4) umfassenden Ständer (5), welcher auf der Grundplatte (2) angeordnet ist und mindestens einen Stützkörper (6) umfasst, der durch transversale Stützwände (7) doppelwandig ausgestaltet ist, und der Gleitflächen (8) für zwei benachbarte Kreuzköpfe (9) aufweist, sowie eine auf dem Ständer (5) angeordnete Zylindersektion (10) zur Aufnahme von Zylindern, wobei die Grundplatte (2), der Ständer (5) und die Zylindersektion (10) durch mindestens einen Zuganker (11) miteinander verbunden sind, der sich im Bereich des Ständers (5) innerhalb des doppelwandigen Stützkörpers (6) erstreckt, wobei in der Grundplatte (2) ein transversales Stützelement (12) vorgesehen ist, das einwandig ausgestaltet ist und die Grundplatte (2) mindestens einen Lagersattel (13) zur Lagerung der Kurbelwelle (3) aufweist, **dadurch gekennzeichnet, dass** der Zuganker (11) im Lagersattel (13) in einem Bereich zwischen einer Längsachse (K) der Kurbelwelle (3) und dem Ständer (5) in einer Aussparung (14) mittels eines aus der Aussparung (14) entfernbaren Halteelements (15) fixiert ist .

2. Kreuzkopf-Grossdieselmotor nach Anspruch 1, wobei die transversalen Stützwände (7) mindestens eines Stützkörpers (6) parallel zueinander angeordnet sind.

3. Kreuzkopf-Grossdieselmotor nach Anspruch 1 oder 2, wobei sich die transversalen Stützwände (7) mindestens eines Stützkörpers (6) in Richtung der Zylindersektion (10) mit sich vergrösserndem Abstand V-förmig erstrecken.

4. Kreuzkopf-Grossdieselmotor nach einem der vorangehenden Ansprüche, wobei sich der Zuganker (11) mittig zwischen den transversalen Stützwänden (7) des Stützkörpers (6) erstreckt.

5. Kreuzkopf-Grossdieselmotor nach einem der vorangehenden Ansprüche, wobei sich der Zuganker (11) asymmetrisch zwischen den transversalen Stützwänden (7) des Stützkörpers (6) erstreckt.

6. Kreuzkopf-Grossdieselmotor nach einem der vorangehenden Ansprüche, wobei sich der Zuganker (11) unter einem vorgebbaren Winkel (α) zu einer Zylinderachse (Z) und senkrecht zur Langsachse (K) der Kurbelwelle (3), bevorzugt unter einem Winkel (α) von 0° bis 5°, im speziellen von 1° bis 3° zwischen den transversalen Stützwänden (7) des Stützkörpers (6) erstreckt.

7. Kreuzkopf-Grossdieselmotor nach einem der vorangehenden Ansprüche, wobei das Stützelement (12) fluchtend zur Längsachse (Z) des Zugankers (11) angeordnet ist.

8. Kreuzkopf-Grossdieselmotor nach einem der vorangehenden Ansprüche, wobei sich zwischen zwei benachbarten Kreuzköpfen (9) genau zwei Zuganker (11) erstrecken.

9. Kreuzkopf-Grossdieselmotor, wobei an der Grundplatte (2) ein Seitenblech (22) vorgesehen ist, das bevorzugt als erweitertes Seitenblech (22) einen Teil der Grundplatte (2) bildet.

10. Kreuzkopf-Grossdieselmotor nach einem der vorangehenden Ansprüche, wobei der Ständer (5) ein Bodenblech (18), ein Deckblech (16) und eine zwischen zwei gegenüberliegenden Gleitflächen (8) angeordnete Mittelwand (17) umfasst.
